# EUROPEAN PATENT SPECIFICATION

(11) **EP 2 752 571 B1**
(45) Date of publication and mention of the grant of the patent: **19.08.2015**
(21) Application number: 13150421.9
(22) Date of filing: 07.01.2013
(51) Int. Cl.: F02D 19/06, F02D 19/08, F02D 13/02, F01L 13/00, F02D 41/30, F02D 41/40

(54) **Method and device for controlling the operation of a dual fuel engine**
Verfahren und Vorrichtung zur Steuerung des Betriebs eines Doppelbrennstoffmotors
Procédé et dispositif pour contrôler le fonctionnement d'un moteur à deux combustibles

(43) Date of publication of application: 09.07.2014
(73) Proprietor: Caterpillar Motoren GmbH & Co. KG, 24159 Kiel (DE)
(72) Inventor: Sixel, Eike Joachim, 24109 Kiel (DE); Haas, Stefan, 24107 Quarnbek / OT Flemhude (DE); Banck, Andreas, 24161 Altenholz (DE); Rebelein, Werner, 24159 Kiel (DE); Ruschmeyer, Kai, 27389 Fintel (DE)
(74) Representative: Kramer Barske Schmidtchen Patentanwälte PartG mbB

(56) References cited:
- EP-A1- 2 136 054
- US-A- 5 228 423

## Description

### Technical Field

The present disclosure generally relates to a method and device for controlling the operation of a dual fuel engine, i.e. an internal combustion engine running with both liquid fuel and gaseous fuel. Such a dual fuel engine may be equipped with an exhaust gas recirculation system (EGR) and/or may be charged via an exhaust gas turbocharger. In particular, but not exclusively, large internal combustion engines configured to bum diesel fuel and gas as used, for example, on ships, in power plants, or with heavy vehicles and construction vehicles may be controlled according to the present disclosure.

### Background

Various technologies for adjusting the opening and closing of inlet valves and outlet valves are known, for example, from EP 0 560 126 A1, GB 969,297, US 5,713,335 A, US 5,666,913 A, JP 2006-153009 A, DE 33 13 313 C2, DE 10 2004 057 438 A1, US 2009/0235886 A1, JP 11-36833 A, DE 32 13 565 A1, US 6,431,134 B1, EP 1 273 795 A1, EP 1 477 638 A1, and DE 10 359 087 B3.

EP 2 136 054 Al shows a device for controlling the operation of a diesel engine equipped with a rotatable shaft provided with three eccentrics. Each eccentric supports an operating lever. A first eccentric supports an inlet valve operating lever formed, for example, as an oscillating arm, which may trace a stroke of an inlet cam via, for example, a roll supported thereon, and may transmit it to the inlet valve via, for example, an inlet valve operating lifter in order to operate the inlet valve. In a similar manner, a second eccentric supports an outlet valve operating lever, which may trace the stroke of an outlet cam via, for example, a roll supported thereon, and transmit it to an outlet valve operating lifter. A stroke of a fuel pump cam may be traced, for example, by a roll arranged at the end of a pump operating lever and transmitted to a pump piston via, for example, a pressure spring. The pump operating lever is supported on the third eccentric. The eccentrics may be formed integrally with the rotatable shaft. The eccentricities of the preferably circular cylindrical circumferential surfaces of the eccentrics relative to the axis of the rotatable shaft, as well as the relative position of the eccentricities relative to the rotational position of the shaft may be selected individually according to the respective requirements. An actuator and gear wheels form an actuator unit. At stationary operation, the diesel engine is operated at a load greater than 25% of the full load with two valve lifting curves, i.e. in a Miller cycle. At loads below 25% of the full load, the shaft is turned, so that the diesel engine is operated with two different valve lifting curves. This technology is also known as flexible camshaft technology (FCT).

All the technologies known from the prior art documents mentioned above seem to be limited to diesel fuel modes and may not be suited for dual fuel engines.

The present disclosure is directed, at least in part, to improving or overcoming one or more aspects of prior systems.

### Summary of the Disclosure

Generally, the present disclosure relates to a device for controlling the operation of a dual fuel engine operable in a low load liquid fuel mode, a high load liquid fuel mode and a gaseous fuel mode (also referred to as gas mode). A rotatable shaft provided with first to third eccentrics may be rotatable by an adjusting device. Two different rotational angles of the shaft in combination with individual designs and arrangements of the first, second and third eccentrics may result in respective different appropriate opening and closing timings of inlet and outlet valves, and of an adjusted injection timing of liquid fuel during a low load liquid fuel mode, a high load liquid fuel mode and a gas fuel mode.

In one aspect of the present disclosure, a device for controlling the operation of a dual fuel engine operable in a low load liquid fuel mode, a high load liquid fuel mode and a gas fuel mode comprises a shaft rotationally supported, the shaft being provided with a first eccentric, a second eccentric and a third eccentric, the first eccentric being configured to support an inlet valve operating lever for controlling an inlet valve, the second eccentric being configured to support an outlet valve operating lever for controlling an outlet valve, the third eccentric being configured to support a fuel pump operating lever for controlling a fuel pump. The device further comprises an adjusting device configured to adjust the rotational angle of the shaft at least to a first angle position and a second angle position different from the first angle position, the first angle position being associated with the high load liquid fuel mode and the second angle position being associated with the low load liquid fuel mode and the gas fuel mode. The first eccentric is designed and arranged on the shaft such that, in the first angle position, the associated inlet valve opens at a first inlet valve opening timing, and, in the second angle position, the associated inlet valve opens at a second inlet valve opening timing later than the first inlet valve opening timing. The second eccentric is designed and arranged on the shaft such that, in the first angle position, the associated outlet valve opens at a first outlet valve opening timing, and, in the second angle position, the associated outlet valve opens at a second outlet valve opening timing earlier than the first outlet valve opening timing. The third eccentric is designed and arranged on the shaft such that, in the first angle position, the associated fuel pump is controlled such that a liquid fuel main injection is performed at a first liquid fuel main injection timing, and, in the second angle position, the associated fuel pump is controlled such that a liquid fuel main injection is performed at a second liquid fuel main injection timing equal to or later than the first liquid fuel main injection timing when the dual fuel engine is operating in the low load liquid fuel mode.

In another aspect of the present disclosure, a method for controlling the operation of a dual fuel internal combustion engine to be operated in a low load liquid fuel mode, a high load liquid fuel mode and a gas fuel mode is disclosed. The internal combustion engine comprises a shaft provided with a first eccentric, a second eccentric and a third eccentric, the first eccentric being configured to support an inlet valve operating lever for controlling an inlet valve, the second eccentric being configured to support an outlet valve operating lever for controlling an outlet valve, the third eccentric being configured to support a fuel pump operating lever for controlling a fuel pump. The method comprises the step of rotating the shaft to a first angle position, in which the first eccentric takes a position such that the associated inlet valve operating lever adjusts and the inlet valve opens at a first inlet valve opening timing, the second eccentric takes a position such that the associated outlet valve operating lever adjusts and the outlet valve opens at a first outlet valve opening timing, and the third eccentric takes a position such that the associated fuel pump operating lever adjusts and the fuel pump performs a liquid fuel main injection at a first liquid fuel main injection timing. The method further comprises the step of rotating the shaft to a second angle position different from the first angle position, in which the first eccentric takes a position such that the associated inlet valve operating lever adjusts and the inlet valve opens at a second inlet valve opening timing later than the first inlet valve opening timing, the second eccentric takes a position such that the associated outlet valve operating lever adjusts and the outlet valve opens at a second outlet valve opening timing earlier than the first outlet valve opening timing, and the third eccentric takes a position such that the associated fuel pump operating lever adjusts and the fuel pump performs a liquid fuel main injection at a second liquid fuel main injection timing equal to or later than the first liquid fuel main injection timing when the dual fuel engine is operating in the low load liquid fuel mode.

As used herein, dual fuel engine may mean any type of internal combustion engine configured to combust both liquid fuel, for example, diesel, heavy fuel oil (HFO) or marine diesel oil (MDO), and gaseous fuel, for example, natural gas.

According to the present disclosure, "late" may mean inter alia the inlet valve opening begins later than the inlet valve opening in the high load liquid fuel mode. "Early" may mean inter alia the outlet valve opening begins earlier than in the high load liquid fuel mode.

It has to be noted that the terms "gas fuel mode", "gas mode" and "gaseous fuel mode" may be used herein for the same kind of operating mode of the dual fuel engine. All these terms may refer to the kind of operating mode of a dual fuel engine in which the dual fuel engine bums gaseous fuel such as, for example, gas of any gas quality, particularly non-pipeline quality gas as associated with gas in oil fields. In this respect, it is to be understood that a pilot injection system injects a very small amount of liquid fuel when the dual fuel engine is operating in the gas mode. The pilot injection system injects a small amount of liquid fuel to ignite a gas/air mixture. Such pilot injection systems are well-known in the art and common in dual fuel engines. A conventional injection system is used when the dual fuel engine runs on liquid fuel such as heavy fuel oil or diesel oil. If a stop of liquid fuel is mentioned herein in respect to a gas mode, the stop of the supply of liquid fuel to the conventional injection system is meant, not to the pilot injection system.

It is to be understood that any reference to an inlet valve, an outlet valve or a fuel pump does not limit the present disclosure to one single valve or pump. To the contrary, one or more inlet and outlet valves or one or more fuel injection pumps may be controlled by one or more eccentrics.

Furthermore, it is to be understood that both the foregoing general description and the following detailed description are exemplary and explanatory only and are not restrictive of the disclosure. Other features and aspects of this disclosure will be apparent to the skilled person based upon the following description, the accompanying drawings and the attached claims.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic diagram of a device for controlling the operation of a dual fuel engine according to the present disclosure;
Fig. 2 shows a schematic diagram of an injection system that may be utilized for implementing the method according to the present disclosure;
Fig. 3 shows a table representing exemplary valve timings and injection timings according to the present disclosure; and
Fig. 4 shows exemplary embodiments of inlet valve curves and outlet valve curves according to a low load diesel fuel mode and a high load diesel fuel mode as adjusted via the device of Fig. 1.

### Detailed Description

The present disclosure may be based in part on the realization that a transition between a liquid fuel mode and a gas mode in a dual fuel engine, for example, at high engine loads, may not be possible with previous systems, for example, previous FCT configurations such as the one disclosed in EP 2 136 054 Al.

In particular, the present disclosure may be based in part on the realization that, generally, an early injection timing should be used in a low load liquid fuel mode to assure a smoke-free combustion. However, when the same FCT configuration is used for the low load liquid fuel mode and the gas mode, knocking combustion may occur in the dual fuel engine when transitioning from the gas mode to the liquid fuel mode at higher engine loads due to the early injection timing. Similarly, when transitioning from the liquid fuel mode to the gas fuel mode at higher loads, high peak firing pressures during the last liquid fuel cycles may result from a late inlet valve closing.

According to the present disclosure, the above-described problems may be reduced by using a relatively late injection timing in the low load liquid fuel mode while reducing the valve overlap in the gas mode and in the low load liquid fuel mode. Further, to assure a relatively smoke-free combustion in the low load liquid fuel mode, a pilot injection system of the dual fuel engine provides an early pilot injection of liquid fuel in the low load liquid fuel mode.

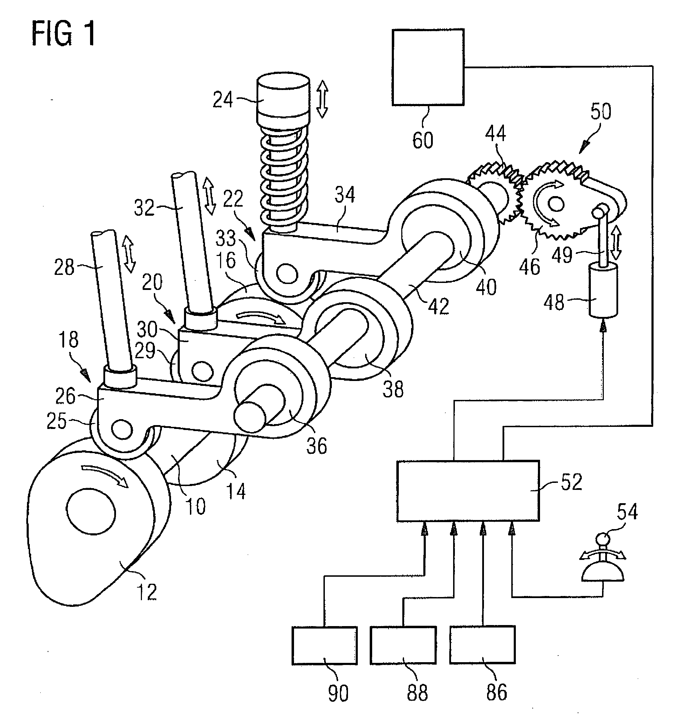

According to Fig. 1, a not illustrated dual fuel engine, charged via an exhaust gas turbocharger, is provided, including, for example, a camshaft 10 which is preferably formed integrally with, for example, several cams, for example, an inlet cam 12, an outlet cam 14 and a pump cam 16. In the exemplary embodiment describe in the following, the dual fuel engine is configured to operate with diesel fuel as one example for a liquid fuel in a low load diesel fuel mode and a high load diesel fuel mode, and on gas in a gas mode. It should be appreciated, however, that other embodiments in accordance with the present disclosure may operate with different liquid fuels and gaseous fuels.

Inlet cam 12 is adapted to operate an inlet valve that is arranged in an inlet of a combustion chamber of a cylinder of the dual fuel engine and operated via, for example, an inlet valve operating arrangement 18. Outlet cam 14 is adapted to operate an outlet valve arranged in an outlet of a combustion chamber of a cylinder of the dual fuel engine via, for example, an outlet valve operating arrangement 20. Pump cam 16 is adapted to operate a pump piston 24 arranged in an injection pump via, for example, a pump operating arrangement 22.

Inlet valve operating arrangement 18 comprises an inlet valve operating lever 26 formed, for example, as an oscillating arm, which is adapted to trace the stroke of inlet cam 12 via, for example, a roll 25 supported thereon, and transmit the same to the inlet valve via, for example, an inlet valve operating lifter 28 in order to operate said inlet valve.

In a similar manner, outlet valve operating arrangement 20 is provided with an outlet valve operating lever 30, which is adapted to trace the stroke of outlet cam 14 via, for example, a roll 29 supported thereon and transmit the same to an outlet valve operating lifter 32.

The stroke of pump cam 16 may be traced by, for example, a roll 33 arranged at the end of a pump operating lever 34 and may be transmitted to pump piston 24.

At the ends facing away from tracing rolls 25, 29, 33, operating levers 26, 30 and 34 are supported on eccentric disks 36, 38 and 40, which are preferably formed integrally with a rotatable shaft 42 that may be supported on an engine housing (not shown). The eccentricities of the preferably circular cylindrical circumferential surfaces of eccentric disks 36, 38, 40 relative to the axis of shaft 42, as well as the relative positions of the eccentricities relative to the rotational position of shaft 42 may be selected individually according to the respective requirements outlined herein.

In order to adjust the rotational position of shaft 42, shaft 42 may be connected, for example, torsionally stiff, to a gearwheel 44 or any other applicable element meshing with, for example, teeth of a segmental gearwheel 46, whose rotational position may be adjustable via, for example, an actuator 48 including an actuator rod 49. Actuator 48 together with segmental gearwheel 46 and gearwheel 44 may form an actuator unit 50. A hydraulic or pneumatic cylinder may be used as a longitudinally adjustable element. In other embodiments, a linear motor or any other suitable element may be adapted to rotate shaft 42 in an appropriate manner.

A control unit 52 is provided for controlling actuator 48. Control unit 52 preferably comprises a microprocessor with appropriate program and data memories and includes several outputs, at least one of said outputs being connected to actuator 48. At least one other output of control unit 52 is connected to a pilot injection system 60 of the dual fuel engine. Pilot injection system 60 may be any know pilot injection system, for example, a common rail pilot injection system, and may be configured to provide a pilot injection of diesel fuel at a timing commanded by control unit 52. In particular, pilot injection system 60 may include an injector and may be configured to perform a pilot injection of diesel fuel in each operating mode of the dual fuel engine.

Control unit 52 is preferably provided with several inputs, one of said inputs being connected with, for example, an operating element 54 for adjusting, for example, the load of the dual fuel engine or the operating mode of the same.

A plurality of cylinder pressure sensors 86 for detecting the cylinder pressure in the cylinders of the dual fuel engine, and a speed sensor 88 for detecting the rotational speed of the crankshaft of the dual fuel engine may also be connected to further inputs of control unit 52. A load sensor 90 for detecting the required load and its change may also be connected to a further input of control unit 52.

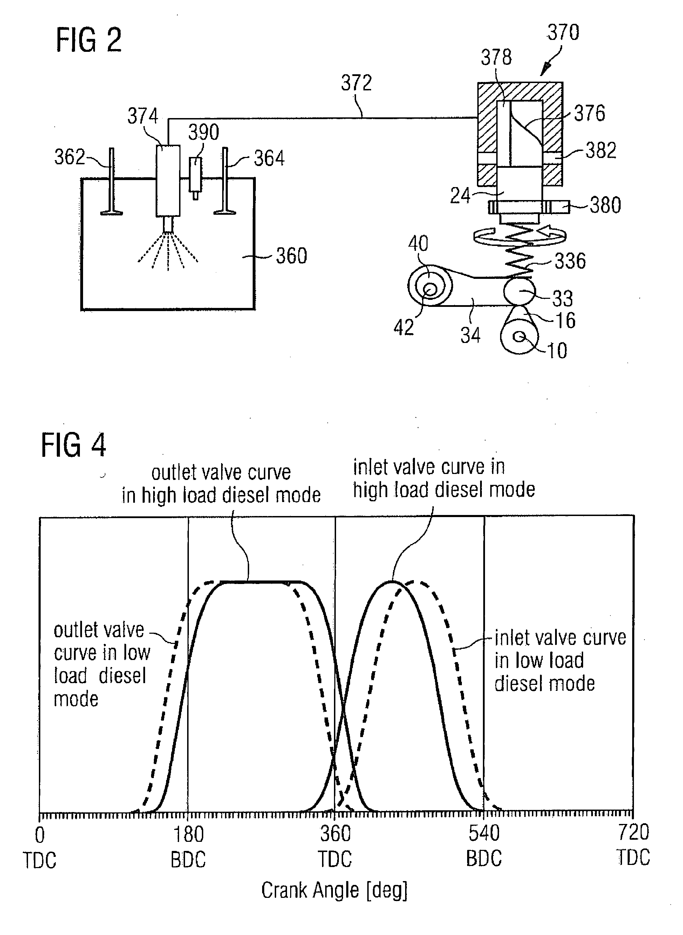

Fig. 2 schematically shows some details of the injection system for a cylinder 360, an inlet valve 362 and an outlet valve 364 of the dual fuel engine. It should be appreciated that any number of cylinders having the same configuration may be included in the dual fuel engine, in any known cylinder configuration, and that any number of cylinders may be associated with a single shaft 42. In other embodiments, each cylinder may be provided with a separate control device including a separate shaft 42.

As shown in Fig. 2, an injection pump 370 is connected to an injection nozzle 374 via a pressure line 372. Injection pump 370 is configured to perform a main injection of diesel fuel in the high load diesel fuel mode and the low load diesel fuel mode of the dual fuel combustion engine. Further, a pilot injector 390 is provided as part of pilot injection system 60 to perform a pilot injection of diesel fuel into the combustion chamber of cylinder 360 in any one of the operating modes of the dual fuel engine. In some embodiments, pilot injector may be configured to receive pressurized diesel fuel from a common rail (not shown) of pilot injection system 60. Further, in some embodiments, a pump piston 24 may be provided with a control edge 376 and a longitudinal groove 378. For adjusting the supply rate, pump piston 24 may be turned around an axis parallel to its linear reciprocating movement via, e.g., a control rod 380. Supply bores 382 may be provided to a supply space of injection pump 370. As shown in Fig. 2, the point of time at which pump piston 24 may close supply bores 382 during its upward stroke can be adjusted by, e.g., rotating eccentric disk 40, such that the position of tracing roll 33, which is supported on the end of pump operating lever 34, is displaced, e.g., along an approximately horizontal line in Fig. 2. It should be appreciated that, in other exemplary embodiments, injection pump 370 may have a different configuration than the one shown in Fig. 2.

As shown in Fig. 2, when camshaft 10 rotates clockwise, pump operating lever 34 is pivoted upwards when roll 33 is contacted by pump cam 16. When shaft 42 is turned, for example, counter clockwise in Fig. 2, pump operating lever 34 is displaced to the left in Fig. 2, and the timing when roll 33 is contacted by pump cam 16 is changed, resulting in a diesel main injection with a different timing. It is obvious from Fig. 1 that the same principle applies to the operation of inlet valve 362 and outlet valve 364. In other words, the timings of the diesel main injection, the inlet valve opening and closing and the outlet valve opening and closing may be adjusted by rotation of shaft 42. In particular, shaft 42 may be rotated between a first position associated with the high load diesel fuel mode and a second position associated with the low load diesel fuel mode and the gas fuel mode.

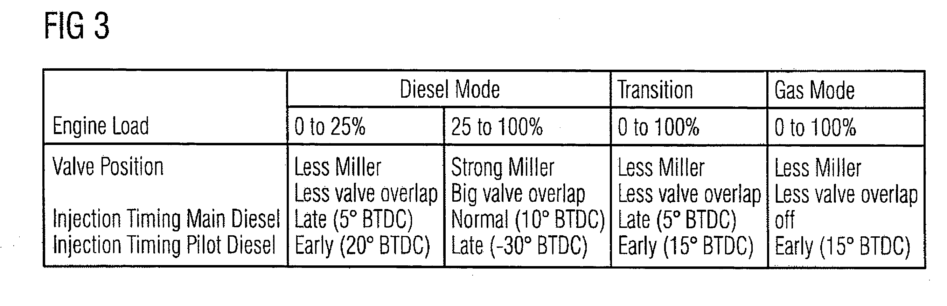

Fig. 3 shows exemplary configurations for the timings of the inlet valves and the outlet valves, respectively, as well as for the timing, i.e. the start, of the diesel main injection and the timing, i.e. the start, of the diesel pilot injection in the different operating modes of the dual fuel engine. By means of the eccentricities of the three eccentric disks 36, 38, 40 (see Fig. 1), the rotational positions of disks 36, 38, 40 on shaft 42, i.e. the opening and/or closing of the inlet valves and the outlet valves and the start of a main injection of diesel fuel may be controlled in an appropriate manner. The timing of the pilot injection may be controlled by control unit 52 independent of the position of shaft 42. Fig. 4 shows exemplary inlet valve curves and outlet valve curves for the low load diesel fuel mode (and the gas mode) and the high load diesel fuel mode, respectively, in accordance with the present disclosure.

As shown in Fig. 3, in some exemplary embodiments of the present disclosure, the timing of the diesel main injection is late in the low load diesel fuel mode when compared to the high load diesel fuel mode, for example, at 5° BTDC, wherein BTDC means Before Top Dead Center. It should be appreciated, however, that in other embodiments the timing of the diesel main injection may be the same in the low load diesel fuel mode and the high load diesel fuel mode, if appropriate. For example, this may be achieved by the eccentricity of eccentric 40 being zero, i.e. the center of disk 40 coinciding with the center of shaft 42. Further, there is less valve overlap in the low load diesel fuel mode than in the high load diesel fuel mode, as shown in Fig. 4. In other words, in the low load diesel fuel mode, the inlet valve opens early and the outlet valve opens late. The valve lifting curves and the main injection timing are shifted by rotation of the appropriately configured shaft 42.

In the exemplary embodiment described herein, shaft 42 is configured to be rotated between two positions, one corresponding to the high load diesel fuel mode and one corresponding to the low load diesel fuel mode and the gas mode. In other words, the valve lifting curves are the same in the low load diesel fuel mode and in the gas mode. However, no diesel main injection is performed in the gas mode. It should be appreciated, however, that in other embodiments more than two positions of shaft 42 may be provided. For example, different valve timings could be provided for the low load diesel fuel mode and the gas mode by using an appropriate configuration of shaft 42 and actuator unit 50.

To compensate for the relatively late diesel main injection in the low load diesel fuel mode, an early pilot injection is performed, for example, at 20° BTDC. Similarly, a pilot injection may be performed in the gas mode. The pilot injection in the gas mode may be performed at a different timing than in the low load diesel fuel mode. Further, in some embodiments, the timing of the pilot injection may be adjusted during the transition between the gas mode and the diesel fuel mode, i.e. when shaft 42 is rotated between the first position and the second position.

In some embodiments, different amounts of pilot fuel may be injected in the gas mode and in the low load diesel fuel mode. For example, in the low load diesel fuel mode, pilot injection system 60 may be controlled to inject pilot fuel at the maximum capacity of pilot injector 390 to aid the combustion process in cylinder 360. In the gas mode, less pilot fuel may be injected by pilot injection system 60.

In some exemplary embodiments, control unit 52 may receive detection results from sensors associated with the dual fuel engine, for example, cylinder pressure sensors 86, and may modify the timing of the pilot injection based on the received detection results, for example, to reduce knocking.

It should be appreciated that the timings for the diesel fuel main injection and the diesel fuel pilot injection given in Fig. 3 are only exemplary and may be modified within certain boundaries. For example, the pilot injection in the low load diesel fuel mode may be performed at between 35° BTDC to 10° BTDC, the main injection in the low load diesel fuel mode may be performed at between 15° BTDC to 0° BTDC, and the main injection in the high load diesel fuel mode may be performed at between 20° BTDC to 0° BTDC.

Similarly, it should be appreciated that the valve lifting curves shown in Fig. 4 are only exemplary. In other embodiments according to the present disclosure, shaft 42 may be configured to result in different valve timings in the corresponding operating modes of the dual fuel engine. For example, an inlet valve opening in the low load diesel fuel mode and the gas mode may be at 35° +/- 40° BTDC, particularly, 35° +/- 10° BTDC, and an inlet valve closing may be at 10° +/- 50° BBDC, particularly, 10° +/- 10° BBDC, wherein BBDC means Before Bottom Dead Center. Further, an outlet valve opening in the low load diesel fuel mode and the gas mode may be at 50° +/- 40° BBDC, particularly 50° +/- 10° BBDC, and an outlet valve closing may be at 35° +/- 40° ATDC, particularly 35° +/- 10° ATDC, wherein ATDC means After Top Dead Center. Likewise, in the high load diesel fuel mode, an inlet valve opening may be at 45° +/- 40° BTDC, particularly 45° +/- 10° BTDC, and an inlet valve closing may be at 20° +/- 50° BBDC, particularly 20° +/- 10° BBDC. Further, an outlet valve opening in the high load diesel fuel mode may be at 40° +/- 40° BBDC, particularly 40° +/- 10° BBDC, and an outlet valve closing may be at 45° +/- 40° ATDC, particularly 45° +/- 10° ATDC.

In some exemplary embodiments of the present disclosure, the low load range and the high load range may represent the total load range of the dual fuel engine. The high load range may, for example, comprise a middle and a high load range of the engine. In an exemplary embodiment of the present disclosure, the low load range may be defined as 0% to 30% of nominal load and the high load range may be defined as 30% to 110% of nominal load.

### Industrial Applicability

In order to realize the method according to the disclosure, advantageously the following operating parameters are chosen:

At stationary operation, i.e. at constant position of operating element 54, the dual fuel engine is operated at a load greater than 25% of the full load, i.e. with a first angle position (high load diesel fuel mode angle position) of shaft 42, for example, in the high load diesel fuel mode.

At loads below 25% of the full load, shaft 42 is turned to a second angle position (low load diesel fuel mode angle position/gas mode angle position), so that the dual fuel engine is operated with the valve lifting curves as shown in Fig. 3 and the late main injection timing and the early pilot injection timing in the low load diesel fuel mode.

If the operator decides to run the dual fuel engine with gas, the dual fuel engine has to be transitioned from the high load diesel fuel mode or the low load diesel fuel mode to the gas mode.

When the transition from the high load diesel fuel mode to the gas mode is performed, an air fuel ratio control is enabled, and shaft 42 is rotated from the first angle position to the second angle position, which is the same as the low load diesel fuel mode angle position, in which the valve and injection timings are controlled via the eccentric disks 36, 38, 40 in accordance with Figs. 3 and 4. After receiving feedback from a corresponding sensor associated with shaft 42, a fraction of gas fuel is ramped up until nearly 100% gas fuel is combusted. While some diesel fuel is still injected via a diesel fuel main injection as shaft 42 is rotated to the second position, the high peak firing pressures during the last combustion cycles with diesel fuel may be reduced due to the relatively late main injection timing when shaft 42 is in the second position.

On the other hand, when the operator decides to run the dual fuel engine with diesel, or in case of an emergency, the air fuel ratio control is disabled and the dual fuel engine is transitioned from the gas mode to the high load diesel fuel mode or the low load diesel fuel mode. In case of a transition from the gas mode to the high load diesel fuel mode, shaft 42 is rotated from the second position to the first position, and the fuel apportionment is changed to 100% diesel. The knocking combustion, which may occur during the last cycles with gas combustion, may be reduced due to the relatively late diesel fuel main injection timing while shaft 42 is in the second position or moving from the second position to the first position.

In addition, when the dual fuel engine is operating in the low load diesel fuel mode, i.e. when it is transitioned from the high load diesel fuel mode to the low load diesel fuel mode by rotating shaft 42 from the first position to the second position, a relatively smoke-free combustion is assured due to the early pilot injection of diesel fuel by pilot injection system 60, despite the relatively late main injection timing.

It should be appreciated that the timings of rotating the shaft 42 and changing the fuel apportionment during the transitions described above may vary. For example, the change in the fuel apportionment may be initiated before rotating shaft 42, during rotation of shaft 42, or after rotating shaft 42 from one position to the other, depending on different circumstances. For example, control unit 52 may be configured to initiate the change in the fuel apportionment and/or adjust the rate of change depending on different desired operating parameters of the dual fuel engine, measurement results from sensors or the like.

It will be appreciated that the adjustment of shaft 42 may be carried out via different adjusting devices, for example, via a hydraulic cylinder, electrically, pneumatically, etc.

Herein, a large internal combustion engines may be any kind of dual fuel engine having an output range of 1,000 kW or more. Dual fuel engines as disclosed herein may be suitable for Heavy Fuel Oil (HFO), Marine Diesel Oil (MDO) and Diesel Oil (DO) operations.

Although preferred embodiments of this disclosure have been described herein, improvements and modifications may be incorporated without departing from the scope of the appended claims.

## Claims

1. A device for controlling the operation of a dual fuel engine operable in a low load liquid fuel mode, a high load liquid fuel mode and a gaseous fuel mode, the device comprising:
a shaft (42) rotationally supported, the shaft (42) being provided with a first eccentric (36), a second eccentric (38) and a third eccentric (40), the first eccentric (36) being configured to support an inlet valve operating lever (26) for controlling an inlet valve, the second eccentric (38) being configured to support an outlet valve operating lever (30) for controlling an outlet valve, the third eccentric (40) being configured to support a fuel pump operating lever (34) for controlling a fuel pump (70); and
an adjusting device (50) configured to adjust the rotational angle of the shaft (42) to at least a first angle position and a second angle position different from the first angle position, the first angle position being associated with the high load liquid fuel mode and the second angle position being associated with the low load liquid fuel mode and the gaseous fuel mode,
the first eccentric (36) being designed and arranged on the shaft (42) such that, in the first angle position, the associated inlet valve opens at a first inlet valve opening timing, and, in the second angle position, the associated inlet valve opens at a second inlet valve opening timing later than the first inlet valve opening timing,
the second eccentric (38) being designed and arranged on the shaft (42) such that, in the first angle position, the associated outlet valve opens at a first outlet valve opening timing, and, in the second angle position, the associated outlet valve opens at a second outlet valve opening timing earlier than the first outlet valve opening timing, and
the third eccentric (40) being designed and arranged on the shaft (42) such that, in the first angle position, the associated fuel pump is controlled such that a liquid fuel main injection is performed at a first liquid fuel main injection timing, and, in the second angle position, the associated fuel pump is controlled such that a liquid fuel main injection is performed at a second liquid fuel main injection timing equal to or later than the first liquid fuel main injection timing when the dual fuel engine is operating in the low load liquid fuel mode.

2. The device of claim 1, further comprising a control unit (52) configured to control a pilot injection system (60) of the dual fuel engine to perform a liquid fuel pilot injection at a first liquid fuel pilot injection timing earlier than the second liquid fuel main injection timing when the dual fuel engine is operating in the low load liquid fuel mode.

3. The device of claim 2, wherein the control unit (52) is further configured to control the pilot injection system (60) of the dual fuel engine to perform a liquid fuel pilot injection at a second liquid fuel pilot injection timing different from the first liquid fuel pilot injection timing when the dual fuel engine is operating in the gaseous fuel mode.

4. The device of claim 2 or 3, wherein the control unit (52) is further configured to control the pilot injection system (60) of the dual fuel engine to provide a liquid fuel pilot injection at a third liquid fuel pilot injection timing during a transition between the gaseous fuel mode and one of the low load liquid fuel mode and the high load liquid fuel mode.

5. The device of any one of claims 2 to 4, wherein the control unit (52) is configured to control the pilot injection system (60) to inject different amounts of liquid fuel at least in the gaseous fuel mode and in the low load liquid fuel mode.

6. The device of any one of claims 2 to 5, wherein the control unit (52) is configured to control the pilot injection system (60) to inject a maximum amount of liquid fuel in the low load liquid fuel mode.

7. The device of any one of claims 2 to 6, wherein the control unit (52) is configured to receive an input from one or more sensors (86, 88, 90) associated with the dual fuel engine, and to adjust the timing of the pilot fuel injection and/or the amount of pilot fuel being injected based on the received input in the different operating modes of the dual fuel engine.

8. The device of any one of claims 2 to 7, wherein the control unit (52) is configured to control the pilot injection system (60) such that the liquid fuel pilot injection at the first liquid fuel pilot injection timing is performed in a range between 30° BTDC to 10° BTDC, preferably 25° BTDC to 15° BTDC, particularly 22° BTDC to 18° BTDC.

9. The device of any one of claims 1 to 8, wherein the second liquid fuel main injection timing is in a range between 15° BTDC to 0° BTDC, preferably 10° BTDC to 0° BTDC, particularly 7° BTDC to 3° BTDC.

10. The device of any one of the preceding claims,
the inlet valve operating lever (26) supporting an inlet valve cam follower (25) configured to contact an inlet cam (12) of a camshaft (10) and configured to support an inlet valve operating lifter (28) for controlling the opening and closing of the inlet valve,
the outlet valve operating lever (30) supporting an outlet valve cam follower (29) configured to contact an outlet cam (14) of the camshaft (10) and configured to support an outlet valve operating lifter (32) for controlling the opening and closing of the outlet valve,
the fuel pump operating lever (34) supporting a fuel pump cam follower (33) configured to contact a fuel pump cam (16) of the camshaft (10) and configured to support a fuel pump operating lifter (24) for controlling the injection timing of the fuel pump.

11. A method for controlling the operation of a dual fuel internal combustion engine to be operated in a low load liquid fuel mode, a high load liquid fuel mode and a gaseous fuel mode, the internal combustion engine comprising a shaft (42) provided with a first eccentric (36), a second eccentric (38) and a third eccentric (40), the first eccentric (36) being configured to support an inlet valve operating lever (26) for controlling an inlet valve, the second eccentric (38) being configured to support an outlet valve operating lever (30) for controlling an outlet valve, the third eccentric (40) being configured to support a fuel pump operating lever (34) for controlling a fuel pump (70), the method comprising the steps of:
adjusting the shaft (42) to a first angle position associated with the high load liquid fuel mode, in which the first eccentric (36) takes a position such that the associated inlet valve operating lever (26) adjusts and the inlet valve opens at a first inlet valve opening timing, the second eccentric (38) takes a position such that the associated outlet valve operating lever (30) adjusts and the outlet valve opens at a first outlet valve opening timing, and the third eccentric (40) takes a position such that the associated fuel pump operating lever (34) adjusts and the fuel pump performs a liquid fuel main injection at a first liquid fuel main injection timing; and
adjusting the shaft (42) to a second angle position different from the first angle position and associated with the low load liquid fuel mode and the gaseous fuel mode, in which the first eccentric (36) takes a position such that the associated inlet valve operating lever (26) adjusts and the inlet valve opens at a second inlet valve opening timing later than the first inlet valve opening timing, the second eccentric (38) takes a position such that the associated outlet valve operating lever (30) adjusts and the outlet valve opens at a second outlet valve opening timing earlier than the first outlet valve opening timing, and the third eccentric (40) takes a position such that the associated fuel pump operating lever (34) adjusts and the fuel pump performs a liquid fuel main injection at a second liquid fuel main injection timing equal to or later than the first liquid fuel main injection timing when the dual fuel engine is operating in the low load liquid fuel mode.

12. The method of claim 11, further comprising transitioning the dual fuel engine between the high load liquid fuel mode and the gas fuel mode by rotating the shaft (42) between the first angle position and the second angle position and changing the fuel apportionment between the liquid fuel and the gaseous fuel.

13. The method of claim 11 or 12, further comprising performing a liquid fuel pilot injection at a first liquid fuel pilot injection timing earlier than the second liquid fuel main injection timing when the dual fuel engine is operating in the low load liquid fuel mode.

14. The method of claim 13 , further comprising performing the liquid fuel pilot injection in a range between 30° BTDC to 10° BTDC, preferably 25° BTDC to 15° BTDC, particularly 22° BTDC to 18° BTDC.

15. The method of any one of claims 11 to 14, further comprising performing the second liquid fuel main injection in a range between 15° BTDC to 0° BTDC, preferably 10° BTDC to 0° BTDC, particularly 7° BTDC to 3° BTDC.

## Patentansprüche

1. Vorrichtung zum Steuern des Betriebs eines Zweikraftstoffmotors, der in einem Niedriglastflüssigkraftstoffmodus, einem Hochlastflüssigkraftstoffmodus und einem Gaskraftstoffmodus betreibbar ist, mit:
einer drehgelagerten Welle (42), die mit einem ersten Exzenter (36), einem zweiten Exzenter (38) und einem dritten Exzenter (40) versehen ist, wobei der erste Exzenter (36) zum Tragen eines Einlassventilbetätigungshebels (26) zum Steuern eines Einlassventils ausgebildet ist, der zweite Exzenter (38) zum Tragen eines Auslassventilbetätigungshebels (30) zum Steuern eines Auslassventils ausgebildet ist, der dritte Exzenter (40) zum Tragen eines Kraftstoffpumpenbetätigungshebels (34) zum Steuern einer Kraftstoffpumpe (70) ausgebildet ist; und
einer Einstellvorrichtung (50), die zum Einstellen des Drehwinkels der Welle (42) auf mindestens eine erste Winkelposition und eine zweite Winkelposition, die sich von der ersten Winkelposition unterscheidet, ausgebildet ist, wobei die erste Winkelposition dem Hochlastflüssigkraftstoffmodus zugeordnet ist und die zweite Winkelposition dem Niedriglastflüssigkraftstoffmodus und dem Gaskraftstoffmodus zugeordnet ist,
wobei der erste Exzenter (36) derart an der Welle (42) ausgebildet und angeordnet ist, dass sich in der ersten Winkelposition das zugehörige Einlassventil zu einem ersten Einlassventilöffnungszeitpunkt öffnet und in der zweiten Winkelposition das zugehörige Einlassventil zu einem zweiten Einlassventilöffnungszeitpunkt, der später als der erste Einlassventilöffnungszeitpunkt ist, öffnet,
wobei der zweite Exzenter (38) derart an der Welle (42) ausgebildet und angeordnet ist, dass sich in der ersten Winkelposition das zugehörige Auslassventil zu einem ersten Auslassventilöffnungszeitpunkt öffnet und in der zweiten Winkelposition das zugehörige Auslassventil zu einem zweiten Auslassventilöffnungszeitpunkt, der früher als der erste Auslassventilöffnungszeitpunkt ist, öffnet, und
wobei der dritte Exzenter (40) derart an der Welle (42) ausgebildet und angeordnet ist, dass in der ersten Winkelposition die zugehörige Kraftstoffpumpe derart gesteuert wird, dass eine Flüssigkraftstoffhaupteinspritzung zu einem ersten Flüssigkraftstoffhaupteinspritzzeitpunkt durchgeführt wird, und in der zweiten Winkelposition die zugehörige Kraftstoffpumpe derart gesteuert wird, dass eine Flüssigkraftstoffhaupteinspritzung zu einem zweiten Flüssigkraftstoffhaupteinspritzzeitpunkt, der gleich dem ersten Flüssigkraftstoffhaupteinspritzzeitpunkt oder später als dieser ist, durchgeführt wird, wenn der Zweikraftstoffmotor in dem Niedriglastflüssigkraftstoffmodus betrieben wird.

2. Vorrichtung nach Anspruch 1, ferner mit einer Steuereinheit (52), die zum Steuern eines Piloteinspritzsystems (60) des Zweikraftstoffmotors zum Durchführen einer Flüssigkraftstoffpiloteinspritzung zu einem ersten Flüssigkraftstoffpiloteinspritzzeitpunkt, der früher als der zweite Flüssigkraftstoffhaupteinspritzzeitpunkt ist, wenn der Zweikraftstoffmotor in dem Niedriglastflüssigkraftstoffmodus betrieben wird, ausgebildet ist.

3. Vorrichtung nach Anspruch 2, bei der die Steuereinheit (52) ferner zum Steuern des Piloteinspritzsystems (60) des Zweikraftstoffmotors zum Durchführen einer Flüssigkraftstoffpiloteinspritzung zu einem zweiten Flüssigkraftstoffpiloteinspritzzeitpunkt, der sich von dem ersten Flüssigkraftstoffpiloteinspritzzeitpunkt unterscheidet, wenn der Zweikraftstoffmotor in dem Gaskraftstoffmodus betrieben wird, ausgebildet ist.

4. Vorrichtung nach Anspruch 2 oder 3, bei der die Steuereinheit (52) ferner zum Steuern des Piloteinspritzsystems (60) des Zweikraftstoffmotors zum Bereitstellen einer Flüssigkraftstoffpiloteinspritzung zu einem dritten Flüssigkraftstoffpiloteinspritzzeitpunkt während eines Übergangs zwischen dem Gaskraftstoffmodus und einem von dem Niedriglastflüssigkraftstoffmodus und dem Hochlastflüssigkraftstoffmodus ausgebildet ist.

5. Vorrichtung nach einem der Ansprüche 2 bis 4, bei der die Steuereinrichtung (52) zum Steuern des Piloteinspritzsystems (60) zum Einspritzen von unterschiedlichen Mengen an Flüssigkraftstoff zumindest in dem Gaskraftstoffmodus und in dem Niedriglastflüssigkraftstoffmodus ausgebildet ist.

6. Vorrichtung nach einem der Ansprüche 2 bis 5, bei der die Steuereinheit (52) zum Steuern des Piloteinspritzsystems (60) zum Einspritzen einer maximalen Menge an Flüssigkraftstoff in dem Niedriglastflüssigkraftstoffmodus ausgebildet ist.

7. Vorrichtung nach einem der Ansprüche 2 bis 6, bei der die Steuereinheit (52) zum Empfangen einer Eingabe von einem oder mehreren Sensoren (86, 88, 90), die dem Zweikraftstoffmotor zugeordnet sind, und zum Einstellen des Zeitpunkts der Pilotkraftstoffeinspritzung und/oder der Menge an eingespritztem Pilotkraftstoff basierend auf der empfangenen Eingabe in den unterschiedlichen Betriebsmodi des Zweikraftstoffmotors ausgebildet ist.

8. Vorrichtung nach einem der Ansprüche 2 bis 7, bei der die Steuereinheit (52) zum Steuern des Piloteinspritzsystems (60) derart, dass die Flüssigkraftstoffpiloteinspritzung zu dem ersten Flüssigkraftstoffpiloteinspritzzeitpunkt in einem Bereich zwischen 30° BTDC bis 10° BTDC, bevorzugt 25° BTDC bis 15° BTDC, insbesondere 22° BTDC bis 18° BTDC, durchgeführt wird, ausgebildet ist.

9. Vorrichtung nach einem der Ansprüche 1 bis 8, bei der der zweite Flüssigkraftstoffhaupteinspritzzeitpunkt in einem Bereich zwischen 15° BTDC bis 0° BTDC, bevorzugt 10° BTDC bis 0° BTDC, insbesondere 7° BTDC bis 3° BTDC, liegt.

10. Vorrichtung nach einem der vorhergehenden Ansprüche, wobei der Einlassventilbetätigungshebel (26) einen Einlassventilnockenstößel (25) trägt, der zum Kontaktieren eines Einlassnockens (12) einer Nockenwelle (10) ausgebildet ist und zum Tragen eines Einlassventilbetätigungshebers (28) zum Steuern des Öffnens und Schließens des Einlassventils ausgebildet ist,
wobei der Auslassventilbetätigungshebel (30) einen Auslassventilnockenstößel (29) trägt, der zum Kontaktieren eines Auslassnockens (14) der Nockenwelle (10) ausgebildet ist und zum Tragen eines Auslassventilbetätigungshebers (32) zum Steuern des Öffnens und Schließens des Auslassventils ausgebildet ist,
wobei der Kraftstoffpumpenbetätigungshebel (34) einen Kraftstoffpumpennockenstößel (33) trägt, der zum Kontaktieren eines Kraftstoffpumpennockens (16) der Nockenwelle (10) ausgebildet ist und zum Tragen eines Kraftstoffpumpenbetätigungshebers (24) zum Steuern des Einspritzzeitpunkts der Kraftstoffpumpe ausgebildet ist.

11. Verfahren zum Steuern des Betriebs eines Zweikraftstoffmotors mit innerer Verbrennung, der in einem Niedriglastflüssigkraftstoffmodus, einem Hochlastflüssigkraftstoffmodus und einem Gaskraftstoffmodus zu betreiben ist, wobei der Motor mit innerer Verbrennung eine Welle (42) aufweist, die mit einem ersten Exzenter (36), einem zweiten Exzenter (38) und einem dritten Exzenter (40) versehen ist, wobei der erste Exzenter (36) zum Tragen eines Einlassventilbetätigungshebels (26) zum Steuern eines Einlassventils ausgebildet ist, der zweite Exzenter (38) zum Tragen eines Auslassventilbetätigungshebels (30) zum Steuern eines Auslassventils ausgebildet ist, der dritte Exzenter (40) zum Tragen eines Kraftstoffpumpenbetätigungshebels (36) zum Steuern einer Kraftstoffpumpe (70) ausgebildet ist, mit folgenden Schritten:
Einstellen der Welle (42) auf eine erste Winkelposition, die dem Hochlastflüssigkraftstoffmodus zugeordnet ist, in der der erste Exzenter (36) eine Position annimmt, so dass der zugehörige Einlassventilbetätigungshebel (26) eingestellt wird und sich das Einlassventil zu einem ersten Einlassventilöffnungszeitpunkt öffnet, der zweite Exzenter (38) eine Position annimmt, so dass der zugehörige Auslassventilbetätigungshebel (30) eingestellt wird und sich das Auslassventil zu einem ersten Auslassventilöffnungszeitpunkt öffnet, und der dritte Exzenter (40) eine Position annimmt, so dass der zugehörige Kraftstoffpumpenbetätigungshebel (34) eingestellt wird und die Kraftstoffpumpe eine Flüssigkraftstoffhaupteinspritzung zu einem ersten Flüssigkraftstoffhaupteinspritzzeitpunkt durchführt; und
Einstellen der Welle (42) auf eine zweite Winkelposition, die sich von der ersten Winkelposition unterscheidet und dem Niedriglastflüssigkraftstoffmodus und dem Gaskraftstoffmodus zugeordnet ist, in der der erste Exzenter (36) eine Position annimmt, so dass der zugehörige Einlassventilbetätigungshebel (26) eingestellt wird und sich das Einlassventil zu einem zweiten Einlassventilöffnungszeitpunkt, der später als der erste Einlassventilöffnungszeitpunkt ist, öffnet, der zweite Exzenter (38) eine Position annimmt, so dass der zugehörige Auslassventilbetätigungshebel (30) eingestellt wird und sich das Auslassventil zu einem zweiten Auslassventilöffnungszeitpunkt, der früher als der erste Auslassventilöffnungszeitpunkt ist, öffnet, und der dritte Exzenter (40) eine Position annimmt, so dass der zugehörige Kraftstoffpumpenbetätigungshebel (34) eingestellt wird und die Kraftstoffpumpe eine Flüssigkraftstoffhaupteinspritzung zu einem zweiten Flüssigkraftstoffhaupteinspritzzeitpunkt, der gleich dem ersten Flüssigkraftstoffhaupteinspritzzeitpunkt oder später als dieser ist, durchführt, wenn der Zweikraftstoffmotor in dem Niedriglastflüssigkraftstoffmodus betrieben wird.

12. Verfahren nach Anspruch 11, ferner mit Überführen des Zweikraftstoffmotors zwischen dem Hochlastflüssigkraftstoffmodus und dem Gaskraftstoffmodus durch Drehen der Welle (42) zwischen der ersten Winkelposition und der zweiten Winkelposition und Ändern der Kraftstoffzuteilung des Flüssigkraftstoffs und des Gaskraftstoffs.

13. Verfahren nach Anspruch 11 oder 12, ferner mit Durchführen einer Flüssigkraftstoffpiloteinspritzung zu einem ersten Flüssigkraftstoffpiloteinspritzzeitpunkt, der früher als der zweite Flüssigkraftstoffhaupteinspritzzeitpunkt ist, wenn der Zweikraftstoffmotor in dem Niedriglastflüssigkraftstoffmodus betrieben wird.

14. Verfahren nach Anspruch 13, ferner mit Durchführen der Flüssigkraftstoffpiloteinspritzung in einem Bereich zwischen 30° BTDC bis 10° BTDC, bevorzugt 25° BTDC bis 15° BTDC, insbesondere 22° BTDC bis 18° BTDC.

15. Verfahren nach einem der Ansprüche 11 bis 14, ferner mit Durchführen der zweiten Flüssigkraftstoffhaupteinspritzung in einem Bereich zwischen 15° BTDC bis 0° BTDC, bevorzugt 10° BTDC bis 0° BTDC, insbesondere 7° BTDC bis 3° BTDC.

## Revendications

1. Dispositif de commande du fonctionnement d'un moteur à deux combustibles utilisable dans un mode de combustible liquide faible charge, un mode de combustible liquide haute charge et un mode de combustible gazeux, le dispositif comprenant :
un arbre (42) supporté en rotation, l'arbre (42) étant doté d'un premier excentrique (36), d'un deuxième excentrique (38) et d'un troisième excentrique (40), le premier excentrique (36) étant configuré pour supporter un levier de fonctionnement de soupape d'entrée (26) pour la commande d'une soupape d'entrée, le deuxième excentrique (38) étant configuré pour supporter un levier de fonctionnement de soupape de sortie (30) pour la commande d'une soupape de sortie, le troisième excentrique (40) étant configuré pour supporter un levier de fonctionnement de pompe à combustible (34) pour la commande d'une pompe à combustible (70) ; et
un dispositif d'ajustement (50) configuré pour ajuster l'angle de rotation de l'arbre (42) dans au moins une première position d'angle et une seconde position d'angle différente de la première position d'angle, la première position d'angle étant associée au mode de combustible liquide haute charge et la seconde position d'angle étant associée au mode de combustible faible charge et au mode de combustible gazeux,
le premier excentrique (36) étant conçu et agencé sur l'arbre (42) de sorte que dans la première position d'angle, la soupape d'entrée associée s'ouvre lors d'une première synchronisation d'ouverture de soupape d'entrée et dans la seconde position d'angle, la soupape d'entrée associée s'ouvre lors d'une seconde synchronisation d'ouverture de soupape d'entrée ultérieure à la première synchronisation d'ouverture de soupape d'entrée,
le deuxième excentrique (38) étant conçu et agencé sur l'arbre (42) de sorte que dans la première position d'angle, la soupape de sortie associée s'ouvre lors d'une première synchronisation d'ouverture de soupape de sortie, et dans la seconde position d'angle, la soupape de sortie associée s'ouvre lors d'une seconde synchronisation d'ouverture de soupape de sortie antérieure à la première synchronisation d'ouverture de soupape de sortie, et
le troisième excentrique (40) étant conçu et agencé sur l'arbre (42) de sorte que dans la première position d'angle, la pompe à combustible associée soit commandée afin qu'une injection principale de combustible liquide soit réalisée lors d'une première synchronisation d'injection principale de combustible liquide et dans la seconde position d'angle, la pompe de combustible associée soit commandée afin qu'une injection principale de combustible liquide soit réalisée lors d'une seconde synchronisation d'injection principale de combustible liquide simultanée ou ultérieure à la première synchronisation d'injection principale de combustible liquide lorsque le moteur à deux combustibles fonctionne dans le mode de combustible liquide basse charge.

2. Dispositif selon la revendication 1, comprenant en outre une unité de commande (52) configurée pour commander un système d'injection pilote (60) du moteur à deux combustibles pour réaliser une injection pilote de combustible liquide lors d'une première synchronisation d'injection pilote de combustible liquide antérieure à la seconde synchronisation d'injection principale de combustible liquide lorsque le moteur à deux combustibles fonctionne dans le mode de combustible liquide faible charge.

3. Dispositif selon la revendication 2, dans lequel l'unité de commande (52) est en outre configurée pour commander le système d'injection pilote (60) du moteur à deux combustibles pour réaliser une injection pilote de combustible liquide lors d'une seconde synchronisation d'injection pilote de combustible pilote différente de la première synchronisation d'injection pilote de combustible liquide lorsque le moteur à deux combustibles fonctionne dans le mode de combustible gazeux.

4. Dispositif selon la revendication 2 ou 3, dans lequel l'unité de commande (52) est en outre configurée pour commander le système d'injection pilote (60) du moteur à deux combustibles pour fournir une injection pilote de combustible liquide lors d'une troisième synchronisation d'injection pilote de combustible liquide pendant une transition entre le mode de combustible gazeux et un mode parmi le mode de combustible liquide faible charge et le mode de combustible liquide haute charge.

5. Dispositif selon l'une quelconque des revendications 2 à 4, dans lequel l'unité de commande (52) est configurée pour commander le système d'injection pilote (60) pour injecter différentes quantités de combustible liquide au moins dans le mode de combustible gazeux et dans le mode de combustible liquide faible charge.

6. Dispositif selon l'une quelconque des revendications 2 à 5, dans lequel l'unité de commande (52) est configurée pour commander le système d'injection pilote (60) pour injecter une quantité maximum de combustible liquide dans le mode de combustible liquide faible charge.

7. Dispositif selon l'une quelconque des revendications 2 à 6, dans lequel l'unité de commande (52) est configurée pour recevoir une entrée d'un ou plusieurs capteurs (86, 88, 90) associés au moteur à deux combustibles, et pour ajuster la synchronisation de l'injection pilote de combustible et/ou la quantité de combustible pilote étant injectée sur la base de l'entrée reçue dans les différents modes de fonctionnement du moteur à deux combustibles.

8. Dispositif selon l'une quelconque des revendications 2 à 7, dans lequel l'unité de commande (52) est configurée pour commander le système d'injection pilote (60) de sorte que l'injection pilote de combustible liquide lors de la première synchronisation d'injection pilote de combustible liquide soit réalisée dans une plage entre 30° avant le point mort haut et 10° avant le point mort haut, de préférence 25° avant le point mort haut et 15° avant le point mort haut, en particulier 22° avant le point mort haut et 18° avant le point mort haut.

9. Dispositif selon l'une quelconque des revendications 1 à 8, dans lequel la seconde synchronisation d'injection principale de combustible liquide est dans une plage entre 15° avant le point mort haut et 0° avant le point mort haut, de préférence 10° avant le point mort haut et 0° avant le point mort haut, en particulier 7° avant le point mort haut et 3° avant le point mort haut.

10. Dispositif selon l'une quelconque des revendications précédentes,
le levier de fonctionnement de soupape d'entrée (26) supportant un suiveur de came de soupape d'entrée (25) configuré pour entrer en contact avec une came d'entrée (12) d'un arbre à came (10) et configuré pour supporter un élément de levage de fonctionnement de soupape d'entrée (28) pour la commande de l'ouverture et de la fermeture de la soupape d'entrée,
le levier de fonctionnement de soupape de sortie (30) supportant un suiveur de came de soupape de sortie (29) configuré pour entrer en contact avec une came de sortie (14) de l'arbre à came (10) et configuré pour supporter un élément de levage de fonctionnement de soupape de sortie (32) pour la commande de l'ouverture et de la fermeture de la soupape de sortie,
le levier de fonctionnement de pompe à combustible (34) supportant un suiveur de came de pompe à combustible (33) configuré pour entrer en contact avec une came de pompe à combustible (16) de l'arbre à came (10) et configuré pour supporter un élément de levage de fonctionnement de pompe à combustible (24) pour la commande de la synchronisation d'injection de la pompe à combustible.

11. Procédé de commande du fonctionnement d'un moteur à combustion interne à deux combustibles à utiliser dans un mode de combustible liquide faible charge, un mode de combustible liquide haute charge et un mode de combustible gazeux, le moteur à combustion interne comprenant un arbre (42) doté d'un premier excentrique (36), d'un deuxième excentrique (38) et d'un troisième excentrique (40), le premier excentrique (36) étant configuré pour supporter un levier de fonctionnement de soupape d'entrée (26) pour la commande d'une soupape d'entrée, le deuxième excentrique (38) étant configuré pour supporter un levier de fonctionnement de soupape de sortie (30) pour la commande d'une soupape de sortie, le troisième excentrique (40) étant configuré pour supporter un levier de fonctionnement de pompe à combustible (34) pour la commande d'une pompe à combustible (70), le procédé comprenant les étapes suivantes :
l'ajustement de l'arbre (42) à une première position d'angle associée au mode de combustible liquide haute charge, dans lequel le premier excentrique (36) prend position de sorte que le levier de fonctionnement de soupape d'entrée associée (26) s'ajuste et la soupape d'entrée s'ouvre lors d'une première synchronisation d'ouverture de soupape d'entrée, le deuxième excentrique (38) prend une position de sorte que le levier de fonctionnement de soupape de sortie associée (30) s'ajuste et la soupape de sortie s'ouvre lors d'une première synchronisation d'ouverture de soupape de sortie, et le troisième excentrique (40) prend une position de sorte que le levier de fonctionnement de pompe à combustible associée (34) s'ajuste et la pompe à combustible réalise une injection principale de combustible liquide lors d'une première synchronisation d'injection principale de liquide ; et
l'ajustement de l'arbre (42) à une seconde position d'angle différente de la première position d'angle et associée au mode de combustible liquide faible charge et au mode de combustible gazeux, dans lequel le premier excentrique (36) prend une position de sorte que le levier de fonctionnement de soupape d'entrée associée (26) s'ajuste et la soupape d'entrée s'ouvre lors d'une seconde synchronisation d'ouverture de soupape d'entrée ultérieure à la première synchronisation d'ouverture de soupape d'entrée, le deuxième excentrique (38) prend une position de sorte que le levier de fonctionnement de soupape de sortie associée (30) s'ajuste et la soupape de sortie s'ouvre lors d'une seconde synchronisation d'ouverture de soupape de sortie antérieure à la première synchronisation d'ouverture de soupape de sortie, et le troisième excentrique (40) prend une position de sorte que le levier de fonctionnement de pompe à combustible associée (34) s'ajuste et la pompe à combustible réalise une injection principale de combustible liquide lors d'une seconde synchronisation d'injection principale de combustible liquide simultanée ou ultérieure à la première synchronisation d'injection principale de combustible liquide lorsque le moteur à deux combustibles fonctionne dans le mode de combustible liquide faible charge.

12. Procédé selon la revendication 11, comprenant en outre la transition du moteur à deux combustibles entre le mode de combustible liquide haute charge et le mode de combustible gazeux par la rotation de l'arbre (42) entre la première position d'angle et la seconde position d'angle et le changement du dosage de combustible entre le combustible liquide et le combustible gazeux.

13. Procédé selon la revendication 11 ou 12, comprenant en outre la réalisation d'une injection pilote de combustible liquide lors d'une première synchronisation d'injection pilote de combustible liquide antérieure à la seconde synchronisation d'injection principale de combustible liquide lorsque le moteur à deux combustibles fonctionne dans le mode de combustible liquide faible charge.

14. Procédé selon la revendication 13, comprenant en outre la réalisation de l'injection pilote de combustible liquide dans une plage entre 30° avant le point mort haut et 10° avant le point mort haut, de préférence 25° avant le point mort haut et 15° avant le point mort haut, en particulier 22° avant le point mort haut et 18° avant le point mort haut.

15. Procédé selon l'une quelconque des revendications 11 à 14, comprenant en outre la réalisation de la seconde injection principale de combustible liquide dans une plage entre 15° avant le point mort haut et 0° avant le point mort haut, de préférence 10° avant le point mort haut et 0° avant le point mort haut, en particulier 7° avant le point mort haut et 3° avant le point mort haut.
